# EUROPEAN PATENT APPLICATION

(11) **EP 4 600 768 A1**
(43) Date of publication of application: **13.08.2025**
(21) Application number: 23943410.3
(22) Date of filing: 12.12.2023
(51) Int. Cl.: G05B 19/042

(54) **CAN BUS-BASED ELECTRONIC CONTROL UNIT AND CONTROL METHOD**

(30) Priority: 30.06.2023 CN 202310792862
(71) Applicant: Jiangsu Advanced Construction Machinery Innovation Center Ltd., Xuzhou, Jiangsu 221004 (CN)
(72) Inventor: SUN, Hui, Xuzhou, Jiangsu 221004 (CN); LIU, Canjie, Xuzhou, Jiangsu 221004 (CN); YANG, Dandan, Xuzhou, Jiangsu 221004 (CN); SUN, Zhenju, Xuzhou, Jiangsu 221004 (CN)
(74) Representative: Proi World Intellectual Property GmbH
(86) International application number: PCT/CN2023/138150
(87) International publication number: WO 2025/000936

(57) **Abstract**

Provided are a CAN bus-based electronic control unit and a control method. The electronic control unit comprises a CAN bus housing (1), an LVDT displacement sensor (2), proportional flow valves (3), and a main control circuit board (4). The LVDT displacement sensor (2), the proportional flow valves (3) and the main control circuit board (4) are installed in the CAN bus housing (1). The LVDT displacement sensor (2) and the control ends of the proportional flow valves (3) are respectively connected to the main control circuit board (4). Each proportional flow valve (3) comprises a moving iron (3.1), a push rod (3.2), and a basin-shaped pole shoe valve sleeve (3.3); the moving iron (3.1), the push rod (3.2), and the basin-shaped pole shoe valve sleeve (3.3) are coaxially arranged; one end of the push rod (3.2) is in contact with the moving iron (3.1), and the other end of the push rod (3.2) is inserted into the basin-shaped pole shoe valve sleeve (3.3); and the ends of the moving iron (3.1) and the push rod (3.2) contacting each other form a bowl-shaped structure.

## Description

### BACKGROUND OF THE INVENTION

### 1. Technical Field

The invention relates to an electronic control unit and method based on a CAN bus, and belongs to the technical field of electronic control.

### 2. Description of Related Art

With the increasingly wider application of electronic information technology in the field of hydraulic control, key elements such as hydraulic valves trend to develop towards intellectualization and digitization. The control accuracy and response speed of an electronic control unit, as the key control component, have a great influence on the performance of the hydraulic valves, and based on the transmission reliability and rapidity of a CAN bus, electronic control products integrate with the CAN bus gradually emerge on the market and put into use.

Up to now, foreign related corporations have launched mature electronic control products based on the CAN bus, such as electro-hydraulic actuator (EHA) of Thomas and powertrain control module (CPM) of Rexroth. The EHA developed by Thomas in Germany is internally integrated with two traditional proportional pressure reducing valves used for controlling the pilot pressure of a controlled valve and detects the displacement of a valve spool by means of a Hall displacement sensor to realize closed-loop control of the displacement of the valve spool of the controlled valve, and a circuit board outputs a control signal as required to drive the proportional pressure reducing valves and detect a feedback signal of the displacement sensor. The pilot pressure is controlled by means of traditional proportional pressure reducing valves, and due to the limitation of the performance of electric proportional pressure reducing valves, the response time is long; and the Hall displacement sensor used for detecting the displacement of the valve spool has a low accuracy and cannot realize high-accuracy control of the displacement of the valve spool. The CPM developed by Bosch Rexroth uses double-coil proportional electromagnetic valves to control the pilot pressure, but the double-coil proportional electromagnetic valves have a large axial size and require a large installation space, which is not beneficial to the reduction of the overall size.

### BRIEF SUMMARY OF THE INVENTION

In view of the defects in the prior art, the objective of the invention is to provide an electronic control unit and method based on a CAN bus to solve the problems of low integration, poor flexibility and low control accuracy in the prior art.

To fulfill the above objective, the invention adopts the following technical solution:

An electronic control unit based on a CAN bus comprises a CAN bus housing, an LVDT displacement sensor, proportional flow valves and a main control circuit board, wherein:
the LVDT displacement sensor is configured as a split-type structure and comprises a displacement sensor body and a displacement sensor transduction circuit board, the displacement sensor body is connected to the displacement sensor transduction circuit board by leading out a coil;
two proportional flow valves are symmetrically mounted on two sides of the displacement sensor body;
the LVDT displacement sensor, the proportional flow valves and the main control circuit board are mounted in the CAN bus housing, control ends of the displacement sensor transduction circuit board and the proportional flow valves are connected to the main control circuit board, oil port end of the proportional flow valves are connected to a controlled element, and a detection end of the displacement sensor body is connected to a valve spool of the controlled element;
each proportional flow valve comprises a movable core, a push rod and a pole piece and valve sleeve assembly, wherein the movable core, the push rod and the pole piece and valve sleeve assembly are arranged coaxially, and the push rod has an end in contact with the movable core and an end inserted into the pole piece and valve sleeve assembly.

Further, the proportional flow valves are two-position three-way electromagnetic valves;
when electromagnetic coils of the proportional flow valves are powered on, oil inlets P are connected to working ports A; when the electromagnetic coils of the proportional flow valves are powered off, return ports T are connected to the working ports A.

Further, an end, in contact with the push rod, of the movable core is bowl-shaped.

Further, the CAN bus housing comprises a CAN bus shell and a CAN bus end cap, the CAN bus shell has an end surface used as a mounting surface provided with proportional flow valve mounting holes and an LVDT displacement sensor mounting hole, as well as an end surface provided with a circuit board mounting cavity, and the CAN bus end cap is fixedly connected to the CAN bus shell by means of screws.

Further, a special-shaped sealing ring is arranged between the CAN bus end cap and the CAN bus shell.

Further, the displacement sensor body comprises a coil, a framework, a pressure tube and an LVDT push rod, the framework is hollow, a tail of the framework is fixed to the CAN bus housing, an elastic element is arranged at a top end of an inside of the framework, a lower end of the elastic element is connected to the LVDT push rod, the pressure tube is disposed around the LVDT push rod, the coil is wound around the framework by two-segment and three-wire winding method, and the coil is led out to connect the displacement sensor body to the displacement sensor transduction circuit board.

Further, the LVDT push rod comprises a magnetic segment and a non-magnetic segment, and the non-magnetic segment has an end abutting against an end surface of the valve spool of the controlled element by means of the elastic element as well as an end connected to the magnetic segment.

Further, a sealing ring is arranged between the pressure tube and the CAN bus housing.

Further, the main control circuit board comprises a power module, an MCU control module, a drive module, a CAN communication module, an anti-interference module and an overvoltage and undervoltage protection module;
the power module provides an adjustable voltage to the other modules;
the drive module outputs a PWM signal to drive the proportional flow valves to act;
the overvoltage and undervoltage protection module is connected to an output terminal of the power module, determines whether the voltage output by the power module is an overvoltage or an undervoltage, and disconnects the power module from the other modules in case of an overvoltage or an undervoltage to improve reliability of the circuit board;
the anti-interference module is arranged between the overvoltage and undervoltage protection module and the drive module and used for filtering out clutters in the voltage generated by electromagnetic interference to drive operating stability of the drive module;
the CAN communication module realizes data exchange between the modules in the main control circuit board and information transfer between the main control circuit board and external attachments; the MCU control module controls the other modules to act coordinately and performs software programming according to user requirements.

Further, the electronic control unit based on a CAN bus further comprises a plug connector and a plug connector adapter;
the plug connector is connected to the main control circuit board, and the plug connector adapter is connected to contact pins of the plug connector.

An electronic control method based on a CAN bus comprises the following steps:
controlling proportional flow valves in an electronic control unit based on a CAN bus to act;
acquiring a target displacement and an actual displacement of a valve spool of a controlled element in the electronic control unit based on a CAN bus;
calculating a deviation err between the target displacement and the actual displacement, and comparing the deviation err with a preset deviation Δerr; and
if err > Δerr, controlling any one proportional flow valve in the electronic control unit based on a CAN bus to act separately, and then controlling the deviation by means of a single-action deviation controller Con1; otherwise, controlling the two proportional flow valves in the electronic control unit based on a CAN bus to act synchronously, and then controlling the deviation by means of a double-action deviation controller Con2.

The invention fulfills the following beneficial effects:
1. For each proportional flow valve, the push rod and the valve spool are integrated, the pole piece and the valve sleeve are integrated, a signal input terminal adopts a contact pin design, the surface, in contact with the push rod, of the movable core is designed to be bowl-shaped, and the push rod (the valve spool) is limited by means of the pole piece and valve sleeve assembly, such that alignment is facilitated, the overall size is small, and the integration is high;
2. The LVDT is configured as a two-segment structure, such that the axial size is reduced; the framework is separated from the pressure tube, such that installation is easy;
3. Compared with a Hall displacement sensor, the LVDT displacement sensor has a high displacement measurement accuracy; by means of two-position three-way proportional flow valves and the main control circuit board, the electronic control unit is more compact in structure; by separately controlling the pressures of two ends of the valve spool, the displacement of the valve spool can be controlled more accurately;
4. The electronic control unit can be used together with a controlled valve as an independent control module, thus having good flexibility in use;
5. The main control circuit board comprises the power module, the MCU control module, the drive module, the CAN communication module, the anti-interference module and the overvoltage and undervoltage protection module, has a programming capacity, a fault diagnosis capacity and high applicability, and can adapt to various types of valves.

### BRIEF DESCRIPTION OF THE SEVERAL VIEWS OF THE DRAWINGS

FIG. 1 is a schematic diagram of an electronic control unit based on a CAN bus according to the invention;
FIG. 2 is a structural view of the electronic control unit based on a CAN bus according to the invention;
FIG. 3 is a sectional structural view of the electronic control unit based on a CAN bus according to the invention;
FIG. 4 is a structural view of an LVDT displacement sensor according to the invention;
FIG. 5 is a sectional structural view of a proportional flow valve according to the invention;
FIG. 6 is a connection diagram of a main control circuit board according to the invention;
FIG. 7 is a block diagram of a complex control method according to the invention;
FIG. 8 is a control flow diagram of a complex controller according to the invention.

Reference signs: 1, CAN bus housing; 1.1, CAN bus shell; 1,2, CAN bus end cap; 1.3, special-shaped sealing ring; 2, LVDT displacement sensor; 2.1, displacement sensor body; 2.2, displacement sensor transduction circuit board; 2.11, coil; 2.12, framework; 2.13, pressure tube; 2.14, elastic element; 2.15, LVDT push rod; 2.16, second sealing ring; 3, proportional flow valve; 3.1, movable core; 3.2, push rod; 3.3, pole piece and valve sleeve assembly; 4, main control circuit board; 5, plug connector; 6, plug connector adapter.

### DETAILED DESCRIPTION OF THE INVENTION

The technical solutions of the invention are described in detail below in conjunction with accompanying drawings and specific embodiments. It should be understood that the embodiments of the application and the specific features in the embodiments are merely used for a detailed description of the technical solutions of the application and are not intended to limit the technical solutions of the application. The embodiments of the application and the technical features in the embodiments can be combined without conflicts.

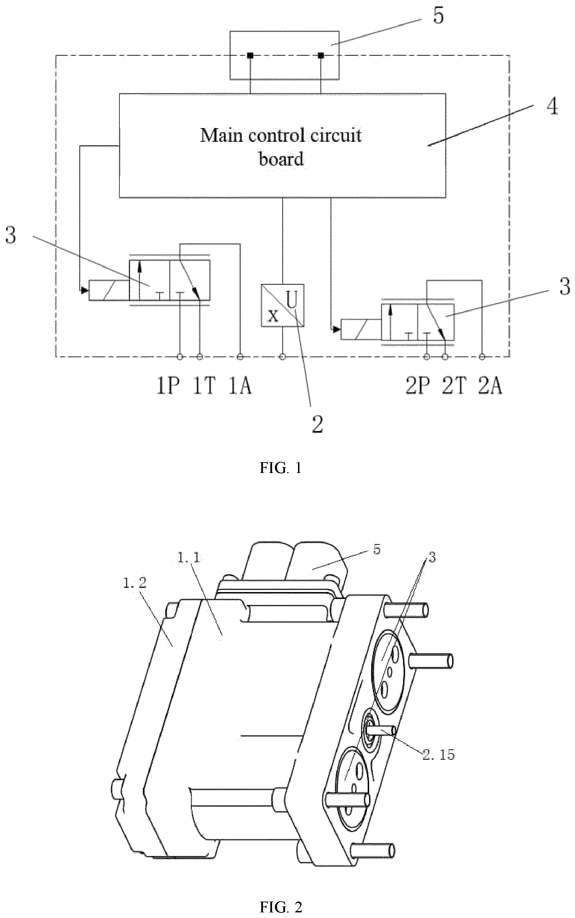

As shown in FIG. 1, this embodiment discloses an electronic control unit based on a CAN bus. The electronic control unit may be fixed to an outer side of a controlled valve with screws or connected to the controlled valve by means of a transition block. As shown in FIG. 1, the electronic control unit specifically comprises a CAN bus housing 1, an LVDT displacement sensor 2, proportional flow valves 3, a main control circuit board 4, a plug connector 5 and a plug connector adapter 6.

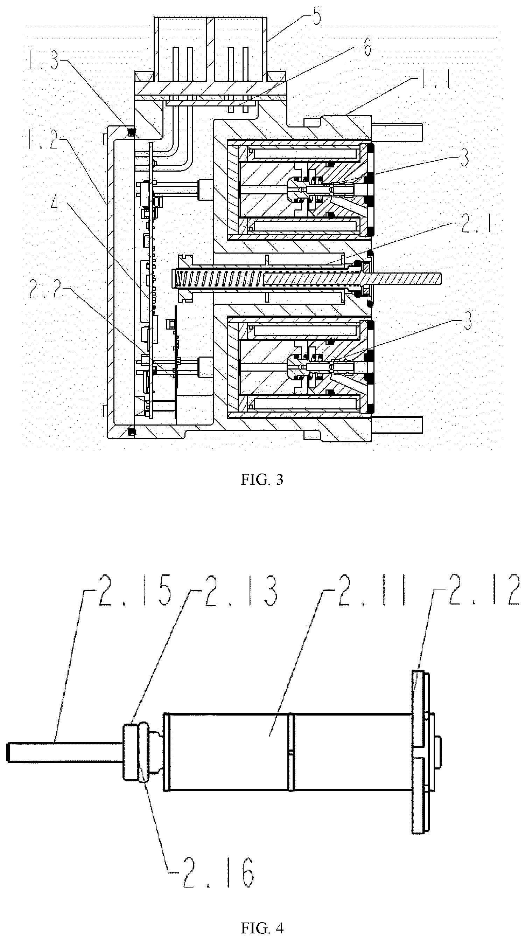

In conjunction with FIG. 3, the CAN bus housing 1 comprises a CAN bus shell 1.1 and a CAN bus end cap 1.2, wherein one end surface of the CAN bus shell 1.1 is used as a mounting surface, two proportional flow valve mounting holes and an LVDT displacement sensor mounting hole are formed in the mounting surface, a circuit board mounting cavity is formed in the other end surface of the CAN bus shell 1.1, the CAN bus end cap 1.2 is fixed to the CAN bus shell 1.1 with screws, and a special-shaped sealing ring 1.3 is arranged between the CAN bus end cap 1.2 and the CAN bus shell 1.1 for sealing.

The LVDT displacement sensor 2 is configured as a two-segment split-type structure. As shown in FIG. 3, the LVDT displacement sensor 2 is divided into a displacement sensor body 2.1 and a displacement sensor transduction circuit board 2.2.

The displacement sensor body 2.1 comprises a coil 2.11, a framework 2.12, a pressure tube 2.13, an elastic element 2.14 and an LVDT push rod 2.15, wherein the framework 2.12 is hollow, the elastic element 2.14 is arranged at a top end of the inside of the framework 2.12, and a lower end of the elastic element 2.14 is connected to the LVDT push rod 2.15; the pressure tube 2.13 is disposed around the LVDT push rod 2.15 and mounted at an outlet end of the framework 2.12; and the coil 2.11 is wound around an outer ring of the framework 2.12 by means of a two-segment and three-wire winding method, such that the axial size of the displacement sensor is reduced. The displacement sensor body 2.1 is mounted in the LVDT displacement sensor mounting hole of the CAN bus shell 1.1, an axis of the displacement sensor body 2.1 coincides with an axis of the CAN bus shell 1.1, and the LVDT push rod 2.15 stretches out of the CAN bus shell 1.1. A tail of the framework 2.12 is fixed to the CAN bus housing 1 with screws, sealing between the pressure tube 2.13 and the CAN housing 1 is realized by means of a sealing ring 2.16, an end of the LVDT push rod 2.15 is in contact with a controlled valve spool by means of the elastic element 2.14, the LVDT push rod 2.15 is divided into a magnetic segment and a non-conductive segment, one end of the non-magnetic segment abuts against an end surface of the controlled valve spool, the other end of the non-magnetic segment is connected to the conductive segment, the LVDT push rod 2.15 moves along with the valve spool, and a produced induced electromotive force is transmitted to the main control circuit board 4 by means of the displacement sensor transduction circuit board 2.2 to realize closed-loop control of the displacement of the valve spool. After coil winding of the displacement sensor body 2.1 is completed, the coil is led out to connect the displacement sensor body 2.1 to the displacement sensor transduction circuit board 2.2.

The displacement sensor transduction circuit board 2.2 is fastened into the circuit board mounting cavity of the CAN bus housing 1 with screws and is connected to the main control circuit board 4 by means of the plug connector, and the displacement sensor transduction circuit board 2.2 converts the induced electromotive force of the displacement sensor body 2.1 into an electric signal that can be recognized by the main control circuit board 4, and outputs the electric signal.

Two proportional flow valves 3 are symmetrically mounted on two sides of the LVDT displacement sensor 2 and arranged in the proportional flow valve mounting holes of the CAN bus shell 1.1, axes of the proportional flow valves 3 are parallel to an axis of the LVDT displacement sensor 2, and the proportional flow valves 3 are connected to the main control board 4 by means of contact pins.

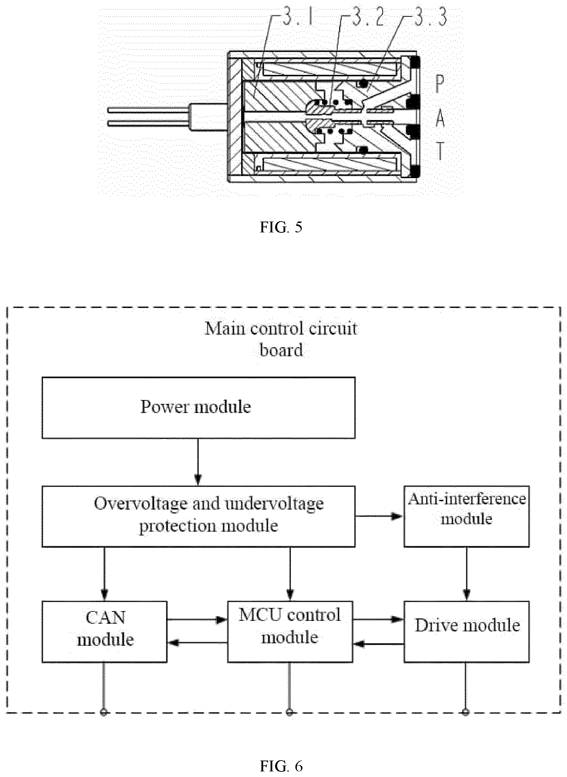

The two proportional flow valves 3 are identical in structure and are both two-position three-way flow valves. With one proportional flow valve 3 as an example, as shown in FIG. 5, the proportional flow valve 3 comprises a movable core 3.1, a push rod 3.2 and a pole piece and valve sleeve assembly 3.3, wherein an axis of the movable core 3.1, an axis of the push rod 3,2 and an axis of the pole piece and valve sleeve assembly 3.3 are in the same line; one end of the push rod 3.1 is in contact with the movable core 3.1, and the other end of the push rod 3.1 is inserted into the pole piece and valve sleeve assembly 3.3; wherein, the push rod 3.2 is not only used as an electromagnetic force output mechanism, but also used as a valve spool of the proportional flow valve; and the pole piece and valve sleeve assembly 3.3 is used as both a pole piece of a proportional electromagnet and a valve sleeve of the proportional flow valve. By integrating the push rod and the valve spool and integrating the pole piece and the valve sleeve, the overall size of the proportional flow valve 3 is reduced, and the installation space is reduced. An end, in contact with the push rod 3.2, of the movable core 3.1 is bowl-shaped, the bottom of a bowl-shaped groove of the movable core 3.1 is planar, and a bowl-shaped end surface of the push rod 3.2 is planar, such that the movable core 3.1 and the push rod 3.2 can be aligned in the moving process.

Each proportional flow valve 3 is provided with three oil ports, which are respectively a return port T, an oil inlet P and a working port A. When the electromagnetic coil is powered on, the oil inlet P is connected to the working port A, and oil enters a pilot oil cavity. When the electromagnetic coil is powered off, the return port T is connected to the working port A, and oil is discharged from the pilot oil cavity. Under the control of a control signal from the main control circuit board 4, the two proportional flow valves 3 work together to accurately control the displacement of the valve spool.

The main control circuit board 4 is assembled in the circuit board mounting cavity of the CAN bus housing 1 and is perpendicular to the axis of the LVDT displacement sensor 2 and the axes of the two proportional flow valves 3. The main control circuit board 4 is connected to the LVDT displacement sensor 2 and the proportional flow valves 3 by, but not limited to, soldering and the plug connector. As shown in FIG. 6, the main control circuit board 4 comprises a power module, an MCU control module, a drive module, a CAN communication module, an anti-interference module, and an overvoltage and undervoltage protection module, wherein the power module provides an adjustable voltage to the other modules; the drive module outputs a pulse width modulation (PWM) signal to drive the proportional flow valves 3 to act; the overvoltage and undervoltage protection module is connected to an output terminal of the power module, determines whether the voltage output by the power module is an overvoltage or an undervoltage, and disconnects the power module from the other modules in case of an overvoltage or an undervoltage to improve the reliability of the circuit board; the anti-interference module is arranged between the overvoltage and undervoltage protection module and the drive module and used for filtering out clutters in the voltage generated by external electromagnetic interference to drive the operating stability of the drive module; the CAN communication module realizes data exchange between the modules in the main control circuit board and information transfer between the main control circuit board and external attachments, and the external attachments comprise the LVDT displacement sensor, the proportional flow valves and the plug connector; and he MCU control module can perform software programming according to user requirements. The main control circuit board 4 has a fault diagnosis function and a programming capacity, can operate in a wide voltage and temperature condition, and is high in reliability and flexibility in use.

To supply power to the electronic control unit based on a CAN bus and data exchange with the outside, the plug connector 5 is welded to the main control circuit board 4 and designed with bent pins to be connected to a controller. Particularly, the plug connector adapter 6 is welded to contact pins of the plug connector 5, such that the number of internal interfaces of the electronic control unit based on a CAN bus is reduced, and space waste of the main control circuit board 4 is avoided. The plug connector 5 is fastened on the CAN bus housing 1 with screws, and sealing between the plug connector 5 and the CAN bus housing 1 is realized by means of a sealing gasket.

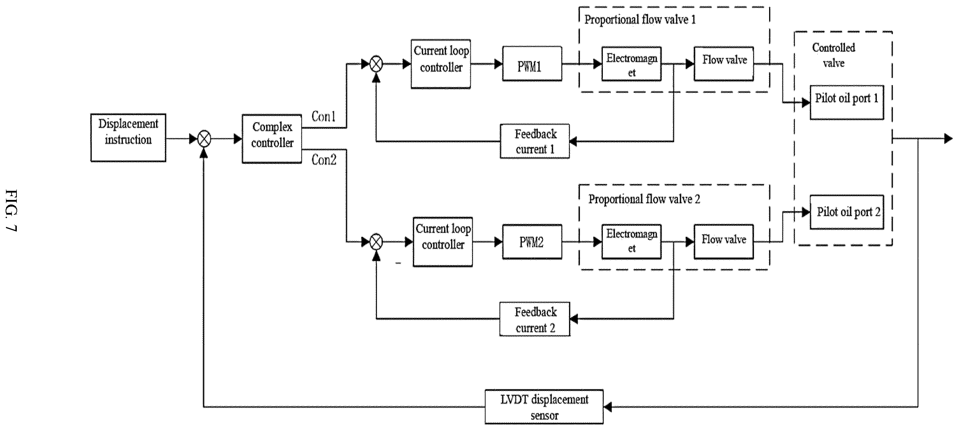

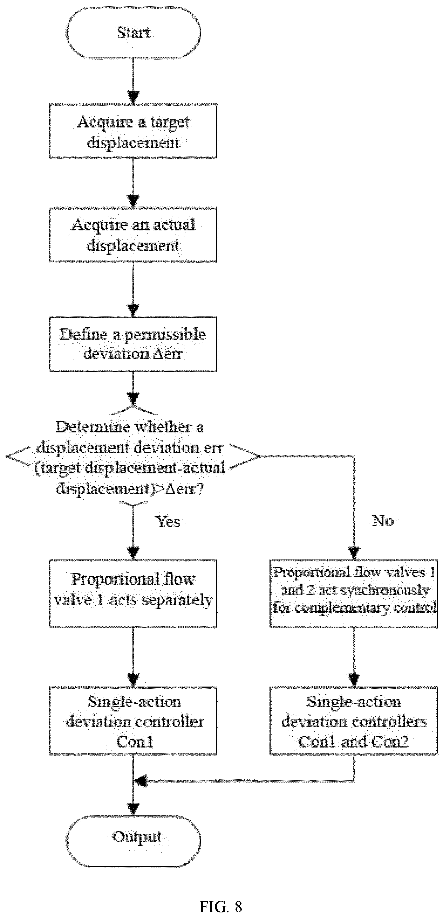

Referring to FIGS. 7 and 8, when closed-loop control of the displacement of the controlled valve spool is performed, an instruction signal from an upper computer or a host controller is transmitted to the main control circuit board 4 by means of the plug connector 6 and processed by the main control circuit board 4 to be converted into a PWM signal to drive the push rods 3.8 of the proportional flow valves 3 to act, the oil inlets P of the proportional flow valves 3 are connected to the working ports A, oil enters a pilot control cavity in one end of the controlled valve spool, the valve spool acts, the LVDT push rod 2.15 of the LVDT displacement sensor 2 moves along with the controlled valve spool and feeds the displacement of the valve spool back to the main control circuit board 4, the main control circuit board 4 compares a target displacement of the valve spool with an actual displacement of the valve spool, a complex controller selects a corresponding control logic according to a displacement deviation to separately control the two proportional flow valves 3, and the displacement of the valve spool is controlled in real time by separately controlling back pressures of two ends of the valve spool, such that the flexibility and energy efficiency of displacement control of the valve spool are improved.

In this embodiment, the CAN bus housing is divided into the CAN bus shell and the CAN bus end cap, which work together to define a space for receiving the displacement sensor, the proportional flow valves and the main control circuit board; the LVDT displacement sensor adopts a two-segment split-type design and is installed in the CAN bus housing, the push rod of the LVDT displacement sensor moves along with a controlled valve spool, and a displacement signal of the valve spool is fed back to the main control circuit board in real time, such that closed-loop control of the displacement of the valve spool is realized; for each proportional flow valve, the valve spool and push rod are highly integrated and the valve sleeve and the pole piece are also highly integrated, and the two proportional flow valves are two-position three-way proportional flow valves identical in structure and are symmetrically distributed on two sides of the LVDT displacement sensor; when the electromagnetic coils are powered on, the oil inlets P of the proportional flow valves are connected to the working ports A, and oil enters the pilot cavity; when the electromagnetic coils are powered off, the return ports T of the proportional flow valves are connected to the working ports A, and oil is discharged from the pilot cavity; and the main control circuit board comprises the power module, the MCU control module, the drive module, the CAN communication module, the anti-interference module, the overvoltage and undervoltage protection module, and drives the proportional flow valves by means of a control program to control the pressure in the pilot cavity of the controlled valve spool, dispatch signals fed back by the displacement sensor, and realize data exchange with the outside. The electronic control unit based on a CAN bus adopts a complex pressure control method to control the pressure in the pilot cavity of the controlled valve spool, the back pressures of the two ends of the main valve spool can be regulated separately and can also be logically controlled synchronously, and the displacement of the controlled valve spool is adjusted in real time according to the displacement deviation of the controlled valve spool, such that high-accuracy control of the displacement of the valve spool is realized.

The above embodiments are merely preferred ones of the invention. It should be noted that for those ordinarily skilled in the art, some improvements and transformations can be made without departing from the technical principle of the invention, and all these improvements and transformations should also fall within the protection scope of the invention.

## Claims

1. An electronic control unit based on a CAN bus, comprising a CAN bus housing (1), an LVDT displacement sensor (2), proportional flow valves (3) and a main control circuit board (4), wherein:
the LVDT displacement sensor (2) is configured as a split-type structure and comprises a displacement sensor body (2.1) and a displacement sensor transduction circuit board (2.2), the displacement sensor body (2.1) is connected to the displacement sensor transduction circuit board (2.2) by leading out a coil;
two said proportional flow valves (3) are symmetrically mounted on two sides of the displacement sensor body (2.1);
the LVDT displacement sensor (2), the proportional flow valves (3) and the main control circuit board (4) are mounted in the CAN bus housing (1), control ends of the displacement sensor transduction circuit board (2.2) and the proportional flow valves (3) are connected to the main control circuit board (4), oil port end of the proportional flow valves (3) are connected to a controlled element, and a detection end of the displacement sensor body (2.1) is connected to a valve spool of the controlled element; each said proportional flow valve (3) comprises a movable core (3.1), a push rod (3.2) and a pole piece and valve sleeve assembly (3.3), wherein the movable core (3.1), the push rod (3.2) and the pole piece and valve sleeve assembly (3.3) are arranged coaxially, and the push rod (3.2) has an end in contact with the movable core (3.1) and an end inserted into the pole piece and valve sleeve assembly (3.3).

2. The electronic control unit based on a CAN bus according to Claim 1, wherein the proportional flow valves (3) are two-position three-way electromagnetic valves;
when electromagnetic coils of the proportional flow valves (3) are powered on, oil inlets P are connected to working ports A; when the electromagnetic coils of the proportional flow valves (3) are powered off, return ports T are connected to the working ports A.

3. The electronic control unit based on a CAN bus according to Claim 1, wherein an end, in contact with the push rod (3.2), of the movable core (3.1) is bowl-shaped.

4. The electronic control unit based on a CAN bus according to Claim 1, wherein the CAN bus housing (1) comprises a CAN bus shell (1.1) and a CAN bus end cap (1.2), the CAN bus shell (1.1) has an end surface used as a mounting surface provided with proportional flow valve mounting holes and an LVDT displacement sensor mounting hole, as well as an end surface provided with a circuit board mounting cavity, and the CAN bus end cap (1.2) is fixedly connected to the CAN bus shell (1.1) by means of screws.

5. The electronic control unit based on a CAN bus according to Claim 4, wherein a special-shaped sealing ring (1.3) is arranged between the CAN bus end cap (1.2) and the CAN bus shell (1.1).

6. The electronic control unit based on a CAN bus according to Claim 1, wherein the displacement sensor body (2.1) comprises a coil (2.11), a framework (2.12), a pressure tube (2.13) and an LVDT push rod (2.15), the framework (2.12) is hollow, a tail of the framework (2.12) is fixed to the CAN bus housing (1), an elastic element (2.14) is arranged at a top end of an inside of the framework (2.12), a lower end of the elastic element (2.14) is connected to the LVDT push rod (2.15), the pressure tube (2.13) is disposed around the LVDT push rod (2.15), the coil (2.11) is wound around the framework (2.12) by two-segment and three-wire winding method, and the coil (2.11) is led out to connect the displacement sensor body (2.1) to the displacement sensor transduction circuit board (2.2).

7. The electronic control unit based on a CAN bus according to Claim 6, wherein the LVDT push rod (2.15) comprises a magnetic segment and a non-magnetic segment, and the non-magnetic segment has an end abutting against an end surface of the valve spool of the controlled element by means of the elastic element (2.14) as well as an end connected to the magnetic segment.

8. The electronic control unit based on a CAN bus according to Claim 6, wherein a sealing ring (2.16) is arranged between the pressure tube (2.13) and the CAN bus housing (1).

9. The electronic control unit based on a CAN bus according to Claim 1, wherein the main control circuit board (4) comprises a power module, an MCU control module, a drive module, a CAN communication module, an anti-interference module and an overvoltage and undervoltage protection module;
the power module provides an adjustable voltage to the other modules;
the drive module outputs a PWM signal to drive the proportional flow valves to act;
the overvoltage and undervoltage protection module is connected to an output terminal of the power module, determines whether the voltage output by the power module is an overvoltage or an undervoltage, and disconnects the power module from the other modules in case of an overvoltage or an undervoltage to improve reliability of the circuit board;
the anti-interference module is arranged between the overvoltage and undervoltage protection module and the drive module and used for filtering out clutters in the voltage generated by electromagnetic interference to drive operating stability of the drive module;
the CAN communication module realizes data exchange between the modules in the main control circuit board (4) and information transfer between the main control circuit board (4) and external attachments;
the MCU control module controls the other modules to act coordinately and performs software programming according to user requirements.

10. The electronic control unit based on a CAN bus according to Claim 1, further comprising a plug connector (5) and a plug connector adapter (6);
the plug connector (5) is connected to the main control circuit board (4), and the plug connector adapter (6) is connected to contact pins of the plug connector (5).

11. An electronic control method based on a CAN bus, using the electronic control unit based on a CAN bus according to Claim 1 and comprising the following steps:
controlling the proportional flow valves (3) in the electronic control unit based on a CAN bus to act;
acquiring a target displacement and an actual displacement of the valve spool of the controlled element in the electronic control unit based on a CAN bus;
calculating a deviation err between the target displacement and the actual displacement, and comparing the deviation err with a preset deviation Δerr; and
if err > Δerr, controlling any one said proportional flow valve (3) in the electronic control unit based on a CAN bus to act separately, and then controlling the deviation by means of a single-action deviation controller Con1; otherwise, controlling the two proportional flow valves (3) in the electronic control unit based on a CAN bus to act synchronously, and then controlling the deviation by means of a double-action deviation controller Con2.
